# EUROPEAN PATENT APPLICATION

(11) **EP 4 512 670 A1**
(43) Date of publication of application: **26.02.2025**
(21) Application number: 23192772.4
(22) Date of filing: 22.08.2023
(51) Int. Cl.: B60R 19/24, B60R 19/34

(54) **CRASH MANAGEMENT SYSTEM**

(71) Applicant: Constellium Singen GmbH, 78224 Singen (DE)
(72) Inventor: FEUERSTEIN, Martin, 78224 SINGEN (DE); MUELLER, Andre, 78247 HILZINGEN (DE)
(74) Representative: Constellium - Propriété Industrielle

(57) **Abstract**

The invention relates to a crash management system (100) for a vehicle front of a motor vehicle, the vehicle front having a longitudinal direction (X), a transverse direction (Y) extending perpendicular to the longitudinal direction (X) and a vertical direction (Z) extending perpendicular to a plane spanned by the longitudinal direction (X) and the transverse direction (Y), the crash management system (100) including a crossbeam (10) which extends essentially along the transverse direction (Y), the crossbeam (10) being attachable to a vehicle structure (1) by means of two crash boxes (20) disposed at a distance (a) to one another, and having at least one reinforcing element (36; 36a; 36b).

## Description

### FIELD OF THE INVENTION

The invention relates to a crash management system for a vehicle front of a motor vehicle, which enables particularly advantageous crash characteristics, especially in electric vehicles, in connection with what is known as a "pole test" in which a collision with the pole-like obstacle takes place in the central area of the crossbeam between the two crash boxes.

### BACKGROUND

A crash management system for a vehicle front of a motor vehicle is known from DE 10 2019 101 718 A1. The known crash management system is characterized by strut-like reinforcing elements disposed in the area of the respective crash box. An essential feature of this is that the reinforcing elements known from said document are connected to the crash box and a vehicle structure on the side facing the vehicle structure and to the respective end area of a crossbeam on the side facing the crossbeam, the latter connection being formed at a distance to the crash box. This is made possible via a section of the reinforcing element projecting obliquely from the crash box. In the event of a crash, in particular a frontal crash, the crossbeam of the crash management system is deformed in such a manner that energy is transferred via the crossbeam and the strut-like reinforcing element into both the crash box and the vehicle structure. This is achieved by shifting the center of rotation of the crossbeam from the junction between the reinforcing element and the crash box to the junction between the reinforcing element and the crossbeam, which results in a significantly greater energy absorption by the crash box.

From DE 10 2019 104 565 A1, another crash management system having reinforcing elements is known, the reinforcing elements being disposed essentially on the side facing the crossbeam. The reinforcing elements known from said document have a first section extending parallel to the crossbeam and disposed between the crossbeam and the end face of the crash box, a second section of relatively short length projecting from the first section and ending at the crash box in an area close to the crossbeam and abutting against the outside of the crash box. The reinforcing elements known from said document serve to enable an advantageous and/or defined deformation behavior of the crash box.

Lastly, it is known from DE 10 2019 108 043 B3 to dispose and/or fasten reinforcing elements either on sides of the crash boxes facing each other or facing away from each other between the crash boxes and the crossbeam. In the area between the crash boxes and the crossbeam, the reinforcing elements extend at an oblique angle to the crash boxes and the crossbeam and are disposed at a lateral distance to the crash box in the area of the crossbeam. The reinforcing elements are also supported on the inside of the crash boxes.

### DESCRIPTION OF THE INVENTION

The crash management system according to the invention for a vehicle front of a motor vehicle having the features of claim 1 has the advantage that the at least one reinforcing element is designed and/or disposed in such a manner that, in the case of what is known as a pole test in which the vehicle collides with a pole-shaped obstacle between the two crash boxes, the structure in the area of the crash boxes is retained as long as possible or it is made more difficult for the crossbeam to become separated from the crash box. During the pole test, the crash box experiences a strong bending stress so that it buckles. The buckling of the crash box results in a high tensile load on the outside of the crash box, which causes the material of the crash box to fail, i.e. the crash box to tear off. According to the invention, the reinforcing element according to the invention forms a tensile connection from the vehicle structure via the respective crash box to the crossbeam. As a result, the reinforcing element is designed to act as a tension band, i.e. tensile forces are transmitted through the reinforcing element so that the crash box is relieved on the outside, which is subject to high tensile loads, and material failure on the outside, i.e. tearing off, is prevented. Due to its function as a tension band, preferably as a pure tension band, the at least one reinforcing element does not negatively affect the function of the crash box in other load cases in which the crash box dissipates energy through axial folding.

In view of the background of the above explanations, it is therefore provided in a crash management system according to the invention for a vehicle front of a motor vehicle having the features of claim 1 that the vehicle front has a longitudinal direction, a transverse direction extending perpendicular to the longitudinal direction, and a vertical direction extending perpendicular to a plane spanned by the longitudinal direction and the transverse direction. The crash management system according to the invention has a crossbeam extending essentially along a transverse direction of the vehicle front. The crossbeam is attachable to a vehicle structure by means of two crash boxes disposed at a distance to each other and has at least one reinforcing element disposed on a side of the two crash boxes facing away as viewed in the transverse direction, the at least one reinforcing element having a first fastening section on the side facing away from the crossbeam, the first fastening section being connected to the vehicle structure and the crash box, the first fastening section extending in a plane spanned by the vertical direction and the longitudinal direction. In addition, it is provided that the at least one reinforcing element has a second fastening section, which is connected to the crash box or the crossbeam or to the crash box and the crossbeam, on the side facing the crossbeam, the second fastening section extending-depending on the structural design of the at least one reinforcing element-either in a plane spanned by the transverse direction and the longitudinal direction, or in a plane spanned by the transverse direction and the vertical direction. Furthermore, according to the invention, it is provided that the at least one reinforcing element is disposed in abutting contact with the crash box over most of its extension extending essentially in the longitudinal direction in order to guarantee an ideal force transmission through the at least one reinforcing element.

Such a design of the at least one reinforcing element enables the at least one reinforcing element to advantageously absorb tensile loads in the event of a crash and reinforces the crash box in the area of the (outer) side wall of the crash box in the longitudinal direction of the crash box, in the area of which particularly high tensile loads occur in the event of a crash.

Advantageous further embodiments of the crash management system according to the invention for a vehicle front of a motor vehicle are listed in the dependent claims.

The reinforcing element described thus far is preferably applied to crash box having a first section having a rectangular cross section, the first section having two first side walls which are parallel to each other and are spaced apart from each other in the transverse direction. Furthermore, the first section has two second side walls which are spaced apart from one another when viewed in the vertical direction, the crash box further having a second section disposed in the vicinity of the crossbeam, the second section comprising two plate-shaped flange sections between which at least areas of the cross section of the crossbeam are accommodated, and the two flange sections being connected to the crossbeam.

A particularly simple and detachable connection of the at least one reinforcing element in the previously mentioned crash management system is achieved in that the first fastening section of the reinforcing element is connected to a first side wall of the crash box and the vehicle structure by a first screw connection.

Preferably, the at least one reinforcing element is either screwed or welded to the crash box and/or the crossbeam in the area of its second fastening section.

For the weight-optimized design of the at least one reinforcing element, the at least one reinforcing element comprises at least one strip-shaped arm section, which extends along the first and the second side wall and a flange section of the crash box, and which is twisted in the transition area between the first and the second side wall and is connected to the plate-shaped flange section and the crossbeam by the second fastening section by means of a second screw connection. The twisting of the at least one arm section in the transition area between the first and the second side wall enables the arm section and thus the reinforcing element to abut against the crash box with as little gap as possible.

The previously mentioned crash management system is further designed advantageously with respect to the force introduction and the force transmission by the at least one reinforcing element in that the at least one reinforcing element comprises two strip-shaped arm sections, each connected to a plate-shaped flange section of the crash box and the crossbeam.

The assembly of the previously mentioned reinforcing element is simplified when the two arm sections are connected to each other on the side facing away from the crossbeam by means of a fastening section in the area of the first fastening section.

An alternative constructive design of the at least one reinforcing element provides that the at least one reinforcing element is plane in the area of the first section of the crash box and is disposed in abutting contact with a first side wall of the crash box, and that the at least one reinforcing element has a retaining section on the side facing the crossbeam, the retaining section being bent in a U-shape and engaging around the first side wall of the crash box in order to form the second fastening section.

In order to enable a weight-optimized design of the at least one reinforcing element on the side facing the vehicle structure by using little material usage for the at least one reinforcing element, it is provided that the at least one reinforcing element ends on the side facing away from the crossbeam at a distance to an end face of the crash box. The crossbeam preferably has a closed cross section with a front belt, a rear belt extending on the side of the crash boxes, and two transverse belts connecting the front belt and the rear belt. Within the closed cross section, partition walls can of course be disposed so as to form a multi-chamber profile, as is known from the prior art. Alternatively, the crossbeam can also be designed as a crossbeam open in the direction of the vehicle structure and having a U-shaped cross section, into which the crash boxes are inserted in order to be connected to the crossbeam.

Preferably, the crossbeam is made of aluminum or an aluminum alloy and is preferably formed as an extruded component. Equally, the crash boxes are also preferably made of aluminum or an aluminum alloy.

In order to enable the highest possible strength of the at least one reinforcing element with low weight and material usage, it is preferably provided that the at least one reinforcing element is formed as a stamped part or a cut part from a steel sheet. In this case, the thickness of the at least one reinforcing element is between 1 mm and 3 mm, preferably between 1.5 mm and 2.0 mm. As connecting the reinforcing element to the crossbeam as well as to the crash box by screw connections is possible, the elements and/or the reinforcing element do not have to be welded to the crash box or the crossbeam and can therefore be made of different materials.

Alternatively, the at least one reinforcing element can also be made of a high-strength aluminum sheet. In this case, the thickness to achieve the desired strength is typically between 2 mm and 4 mm, preferably 2.5 mm to 3 mm.

A further design variant which makes it possible in a particularly simple and advantageous manner to connect the at least one reinforcing element to the crash box and the crossbeam exclusively via screw connections provides that a threaded mount for the screw connection to the crash box and the crossbeam is integrated in the arm sections in the area of the second fastening section. This allows a simple screw connection in the vertical direction of the at least one reinforcing element between the transverse belts of the crossbeam.

Lastly, it is preferably provided that the crash management system has two reinforcing elements which are disposed on opposite sides of the crash boxes as viewed in the transverse direction of the front of the vehicle.

Further advantages, features and details of the invention will be apparent from the following description of preferred embodiments of the invention and from the drawings.

### DESCRIPTION OF THE DRAWING:

- Fig. 1: shows a simplified illustration of the main components of a crash management system for a front of a motor vehicle,
- Fig. 2: shows a subsection of the crash management system of Fig. 1 in the area of a crash box in a first embodiment of the invention,
- Fig. 3: shows a perspective view of an embodiment of a reinforcing element and a crash box modified compared to Fig. 2,
- Fig. 4: shows a perspective view of another modified embodiment of a reinforcing element compared to Fig. 2, and
- Fig. 5: show a different perspective view of a reinforcing element designed according to Fig. 4 in the assembled state.

### DETAILED DESCRIPTION OF THE INVENTION

Identical elements or elements with the same function are given the same reference numerals in the figures.

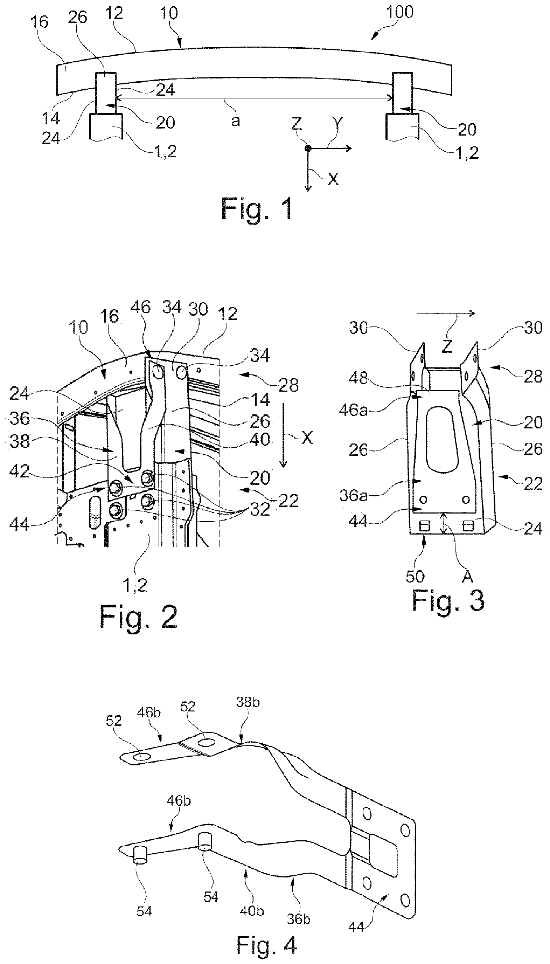

In Fig. 1, the essential components of a crash management system 100 of a motor vehicle, in particular for a vehicle front of an electrically driven motor vehicle, are shown. According to the representation of Fig. 1, the vehicle front has a longitudinal direction X, a transverse direction Y extending perpendicular to the longitudinal direction X and a vertical direction Z extending perpendicular to a plane spanned by the longitudinal direction X and the transverse direction Y and extending perpendicular to the drawing plane of Fig. 1.

The crash management system 100 comprises a crossbeam 10, which is preferably, but not restrictively, made of aluminum or an aluminum alloy and is formed as an extrusion component. The crossbeam 10, which extends essentially in the transverse direction Y, may furthermore be curved in areas, as is known from the prior art.

The crossbeam 10 preferably has a closed cross section with a front belt 12, a rear belt 14 extending parallel to the front belt 12 and two transverse belts 16, 18 connecting the front belt 12 to the rear belt 14 and disposed parallel to each other, meaning the crossbeam 10 has at least an essentially rectangular cross section.

In addition, it is mentioned that horizontally and/or vertically disposed partition walls can be disposed within the cross section of the crossbeam 10 in a known manner in order to form the cross section of the crossbeam 10 as a multi-chamber profile.

The crossbeam 10 is attached to a vehicle structure 1 by means of two crash boxes 20 disposed at a distance a to each other. The vehicle structure 1 has longitudinal supports 2 in particular in the area of the fastening points of the crash boxes 20. In the exemplary embodiment, the two crash boxes 20 are inserted in the inner cross section of the vehicle structure 1 and/or of the longitudinal supports 2 when viewed in the longitudinal direction X.

The crash boxes 20 preferably also made of aluminum or an aluminum alloy and, on the side facing the vehicle structure 1, have a first section 22 with an at least essentially rectangular cross section, the first section 22 having two first side walls 24, which are parallel to one another and are spaced apart from each other in the transverse direction Y, and two second side walls 26 which are spaced apart from each other in the vertical direction Z. On the side facing the crossbeam 10 and/or in the vicinity of the crossbeam 10, the crash box 20 comprises a second section 28 having two plate-shaped flange sections 30, between which at least areas of the cross section of the crossbeam 10 are accommodated, the two plate-shaped flange sections 30 being connected to the crossbeam 10.

The crash box 20 is fastened to the vehicle structure 1 in the area of the first section 22 of the crash box 20 via at least one first screw connection 32 and to the crossbeam 10 in the area of the second section 28 of the crash box 20 via at least one second screw connection 34. For this purpose, the crossbeam 10 and the vehicle structure 1 and the crash box 20 have through holes for the screw connections 32, 34.

For reinforcing the crash boxes 20 extending essentially in the longitudinal direction X to improve the crash behavior, in particular in what is known as a pole test, at least one of the two crash boxes 20, preferably both crash boxes 20, has a reinforcing element 36 in each case as shown in Fig. 2.

In the event that both crash boxes 20 each have a reinforcing element 36, the two reinforcing elements 36 are disposed on sides of the crash boxes 20 facing away from one another. In the event that only one of the two crash boxes 20 has a reinforcing element 36, this reinforcing element 36 is disposed on the respective crash box 20 on the side facing away from the other crash box 20.

The reinforcing element 36 according to Fig. 2 is disposed in abutting contact with the crash box 20 in the area of a first side wall 24 of the crash box 20 over most of its direction extending essentially in the longitudinal direction X, and in abutting contact with the vehicle structure 1 or the crash box 20 in the transition area between the crash box 20 and the vehicle structure 1. The reinforcing member 36 according to Fig. 2 has two strip-shaped arm sections 38, 40, each extending along a first and a second side wall 24, 26 and a plate-shaped flange section 30 of the crash box 20. Each arm section 38, 40 is twisted in the transition area between the first and second side wall 24, 26 so that the arm sections 38, 40 conform to the outer contour of the crash box 20. On the side facing the vehicle structure 1, the two arm sections 38, 40 are connected to each other by means of a fastening section 42.

The reinforcing element 36 is fastened in a transition area between the first section 22 of the crash box 20 and the vehicle structure 1 via a first fastening section 44 by means of the first screw connection 32 or by means of several first screw connections 32 at the level of the fastening section 42. On the side facing the crossbeam 10, the reinforcing element 36 is fastened in the area of a second fastening section 46 in the end area of the arm sections 38, 40 by means of the second screw connections 34.

While the reinforcing element 36 extends in the area of the first fastening section 44 in a plane spanned by the longitudinal direction X and vertical direction Z, the second fastening section 46 extends in a plane spanned by the longitudinal direction X and transverse direction Y.

It is additionally mentioned that instead of two arm sections 38, 40, the reinforcing element 36 can also have only one single arm section 38 or 40. In this case, it is of course also conceivable to dispense with the fastening section 46, so that the corresponding arm section 38, 40 is completely strip-shaped.

The reinforcing element 36a shown in Fig. 3, which is modified compared to Fig. 2, is plane in the area of the first section 22 of the crash box 20 and is disposed in abutting contact with a first side wall 24 of the crash box 20. On the side facing the crossbeam 10, the reinforcing element 36a has a U-shaped retaining section 48 which, in order to form the second fastening section 46a, engages around the first side wall 24 of the crash box 20 in the transition area between the first section 22 to the two plate-shaped flange sections 30. The first fastening section 44 of the reinforcing element 36a is screwed and/or fastened to the side wall 24 and the longitudinal supports 2 and/or the vehicle structure 1 via the first screw connections 32 in analogy to the reinforcing element 36.

As can be seen in particular from Fig. 3, the reinforcing element, 36a ends on the side facing the vehicle structure 1 at a distance A to an end face 50 of the crash box 20.

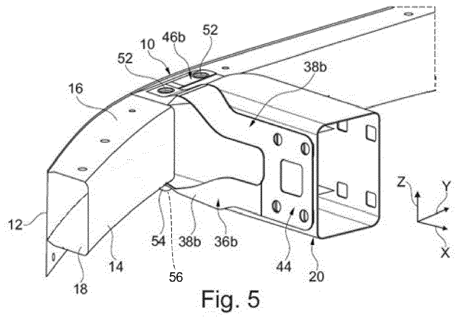

In Figs. 4 to 5, a reinforcing element 36b that is once again averted is shown. The reinforcing element 36b is formed similarly to the reinforcing element 36. However, it has a modified second fastening section 46b which has two through holes 52, which are spaced apart from one another when viewed in the transverse direction Y in the area of one arm section 38b, and has two threaded mounts 54 in the area of its second arm section 40b, the threaded mounts 54 being spaced apart from one another when viewed in the transverse direction Y and disposed flush with the through holes 52. The threaded mounts 54 can be formed monolithically with the second arm section 40b or can be formed by separate threaded nuts which are preferably connected to the arm section 40b by a material bond. The threaded mounts 54 are used for fastening (long) fastening screws as second fastening screws 56, which pass through the through holes 52 and enable the reinforcing element 36b to be fastened to the crash box 20 and the crossbeam 10 using the threaded mounts 54. The second fastening screws 56 are not shown in Figure 5, but are indicated by a dotted line.

Preferably, but not restrictively, the reinforcing element 36, 36a, 36b is made of a stamped steel sheet and has a thickness or material thickness between 1 mm and 3 mm, preferably between 1.5 mm and 2.0mm. In the event that the reinforcing element 36, 36a, 36b is made of aluminum instead of steel, for example, the material thickness and/or the thickness of the reinforcing element 36, 36a, 36b is to be made correspondingly greater so that the same strength or tensile forces can be absorbed and transmitted by the reinforcing element 36, 36a, 36b.

The crash management system 100 described thus far can be modified or altered in a variety of ways without departing from the spirit of the invention. For example, the invention can also be applied to the rear of the vehicle. Furthermore, the invention is not limited to electrically driven motor vehicles.

### List of references:

- 1: vehicle structure
- 2: longitudinal support

- 10: crossbeam
- 12: front belt
- 14: rear belt
- 16: cross belt
- 18: cross belt
- 20: crash box
- 22: first section
- 24: first side wall
- 26: second side wall
- 28: second section
- 30: plate-shaped flange section
- 32: first screw connection
- 34, 56: second screw connection
- 36, 36a,36b: reinforcing element
- 38, 38b: arm section
- 40, 40b: arm section
- 42: fastening section
- 44: first fastening section
- 46, 46a, 46b: second fastening section
- 48: retaining section
- 50: front face
- 52: through hole
- 54: threaded mount

- 100: crash management system

- A, a: distance
- X: longitudinal direction
- Y: transverse direction
- Z: vertical direction

## Claims

1. A crash management system (100) for a vehicle front of a motor vehicle, the vehicle front having a longitudinal direction (X), a transverse direction (Y) extending perpendicular to the longitudinal direction (X), and a vertical direction (Z) extending perpendicular to a plane spanned by the longitudinal direction (X) and the transverse direction (Y), the crash management system (100) containing a crossbeam (10) which extends essentially along the transverse direction (Y), the crossbeam (10) being attachable to a vehicle structure (1) by means of two crash boxes (20) disposed at a distance (a) to one another, and having at least one reinforcing element (36; 36a; 36b) which is disposed on a side of the two crash boxes (20) facing away when viewed in the transverse direction (Y), the at least one reinforcing element (36; 36a; 36b) having a first fastening section (44), which is connected to the vehicle structure (1) and to the crash box (20), on the side facing away from the crossbeam (10), the at least one reinforcing element (36; 36a; 36b) having a second fastening section (46; 46a; 46b), which is connected to the crash box (20) or to the crossbeam (10) or to the crash box (20) and the crossbeam (10), on the side facing the crossbeam (10), and the at least one reinforcing element (36; 36a; 36b) being disposed in abutting contact with the crash box (20) over most of its extension extending essentially in the longitudinal direction (X).

2. The crash management system of claim 1,
**characterized in that**
the at least one reinforcing element (36; 36a; 36b) is designed to act as a tension band.

3. The crash management system according to claim 1 or 2,
**characterized in that**
the crash box (20) has a first section (22) having a rectangular cross section, the first section (22) having two first side walls (24), which are parallel to one another and are spaced apart from one another in the transverse direction (Y), and two second side walls (26), which are spaced apart from one another in the vertical direction (Z), and has a second section (28) disposed in the vicinity of the crossbeam (10), the second section (28) having two plate-shaped flange sections (30), between which at least areas of the cross section of the crossbeam (10) are accommodated, and the two plate-shaped flange sections (30) being connected to the crossbeam (10).

4. The crash management system according to claim 3,
**characterized in that**
the first fastening section (44) is connected to the first side wall (24) of the crash box (20) and to the vehicle structure (1) by a first screw connection (32).

5. The crash management system according to any one of claims 1 to 4,
**characterized in that**
the second fastening section (46; 46a; 46b) is screwed or welded to the crash box (20) and/or the crossbeam (10) in the area of its second fastening section.

6. The crash management system according to any one of claims 1 to 5,
**characterized in that**
the at least one reinforcing element (36; 36b) comprises at least one strip-shaped arm section (38; 38b, 40; 40b) extending along the first and the second side wall (24, 26) and a plate-shaped flange section (30) of the crash box (20), and **in that** the at least one arm section (38; 38b, 40; 40b) is twisted in the transition area between the first and the second side wall (24, 26) and is connected to the plate-shaped flange section (30) and the crossbeam (10) by the second fastening section (46; 46b) by means of a second screw connection (34; 56).

7. The crash management system of claim 6,
**characterized in that**
the at least one reinforcing member (36; 36b) comprises two strip-shaped arm sections (38; 38b, 40; 40b) each connected to a plate-shaped flange section (30) of the crash box (20) and the crossbeam (10).

8. The crash management system of claim 7,
**characterized in that**
the two arm sections (38; 38b, 40; 40b) are connected to each other on the side facing away from the crossbeam (10) by means of a fastening section (42) in the area of the first fastening section (44).

9. The crash management system according to claim 3 or 4,
**characterized in that**
the at least one reinforcing element (36a) is plane in the area of the first section (22) of the crash box (20) and is disposed in abutting contact with a first side wall (24) of the crash box (20), and **in that** the at least one reinforcing element (36a) has a retaining section (48) on the side facing the crossbeam (10), the retaining section (48) being bent in a U-shape and engaging around the first side wall (24) of the crash box (20) in order to form the second fastening section (46a).

10. The crash management system according to any one of claims 1 to 9,
**characterized in that**
the at least one reinforcing element (36; 36a; 36b) ends on the side facing away from the crossbeam (10) at a distance (A) to an end face (50) of the crash box (20).

11. The crash management system according to any one of claims 1 to 10,
**characterized in that**
the crossbeam (10) is made of aluminum or an aluminum alloy and is preferably formed as an extruded component, and **in that** the crash boxes (20) are made of aluminum or an aluminum alloy.

12. The crash management system according to any one of claims 1 to 11,
**characterized in that**
the at least one reinforcing element (36; 36a; 36b) is formed as a stamped part or cut part from a steel sheet.

13. The crash management system of claim 12,
**characterized in that**
the thickness of the at least one reinforcing element (36; 36a; 36b) is between 1 mm and 3 mm, preferably between 1.5 mm and 2.0mm.

14. The crash management system according to any one of claims 7 to 13,
**characterized in that**
a threaded mount (54) for the screw connection to the crash box (20) and the crossbeam (10) is integrated in the arm sections (38b, 40b) in the area of the second fastening section (46b).

15. The crash management system according to any one of claims 1 to 14,
**characterized in that**
the crash management system (100) has two reinforcing elements (36; 36a; 36b), which are disposed on opposite sides of the crash boxes (20) as viewed in the transverse direction (Y).
